(19)

Europäisches
Patentamt

European
Patent Office

Office européen
des brevets

(11) **EP 1 571 730 B1**

(12) **EUROPEAN PATENT SPECIFICATION**

(45) Date of publication and mention
of the grant of the patent:
**07.03.2012 Bulletin 2012/10**

(51) Int Cl.:
***H01Q 21/00*** (2006.01)      ***H04B 7/04*** (2006.01)

(21) Application number: **02772015.0**

(86) International application number:
**PCT/CN2002/000765**

(22) Date of filing: **30.10.2002**

(87) International publication number:
**WO 2004/040699 (13.05.2004 Gazette 2004/20)**

(54) **CONVERSION METHOD OF TRANSMITTING AND RECEIVING WEIGHTING VALUE IN THE INTELLIGENT ANTENNA SYSTEM**

UMWANDLUNGSVERFAHREN DER ÜBERTRAGUNG UND DES EMPFANGS DES GEWICHTUNGSWERTES IM INTELLIGENTEN ANTENNENSYSTEM

PROCEDE DE CONVERSION POUR L'EMISSION ET LA RECEPTION D'UNE VALEUR DE PONDERATION DANS UN SYSTEME D'ANTENNES INTELLIGENT

(84) Designated Contracting States:
**AT BE BG CH CY CZ DE DK EE ES FI FR GB GR IE IT LI LU MC NL PT SE SK TR**

(43) Date of publication of application:
**07.09.2005 Bulletin 2005/36**

(73) Proprietor: **ZTE Corporation**
**Shenzhen, Guangdong 518057 (CN)**

(72) Inventors:
• **DING, Jiewei**
**Shenzhen,**
**Guandong 518057 (CN)**
• **ZHANG, Junfeng**
**Shenzhen,**
**Guandong 518057 (CN)**

• **ZHAI, Yibin**
**Shenzhen,**
**Guangdong 518057 (CN)**

(74) Representative: **Gray, John James**
**Murgitroyd & Company**
**Scotland House**
**165-169 Scotland Street**
**Glasgow G5 8PL (GB)**

(56) References cited:
**WO-A2-02/47286      CN-A- 1 237 808**
**CN-A- 1 315 756      US-A- 5 889 825**
**US-A- 6 018 317      US-B1- 6 310 704**

**Description**

FIELD OF THE INVENTION

The present invention relates to a system using antenna array to receive and transmit data and using multi-access mode to communicate. More particularly, the invention relates to a method of deciding transmitting weight vector according to receiving weight vector of antenna array in frequency division duplex mobile communication system using antenna array to receive and transmit data.

BACKGROUND OF THE INVENTION

In a common mobile communication system, a signal between a base station and a mobile station is transmitted through plurality of paths between a receiver and a transmitter. This multi-path propagation is caused mainly by signal reflection on object surface around the transmitter and receiver. Since the propagation paths are different, propagation time delay and arriving angle of the same signal through different paths to the receiver are different, which leads to multi-path interference and signal fading.

For reducing multi-path interference and signal fading, the current communication system uses a receiving device and method that implements time diversity combination on the received signal.

Now take a CDMA system as an example.

In a CDMA system, a receiver with multi-branch structure is used, in which each branch is synchronized with a multi-path group propagating along a single path. Each branch is a single receiver component, and its function is demodulating desired received signal component. In a conventional CDMA system, coherent or incoherent methods are used to combine signals received by different receiver components so as to improve the quality of the received signal. This receiver is called Rake receiver, which can accumulate the multi-path energy with different time delay for the same user according to certain rules as so to improve the performance of the receiver.

Rake receiver can be seen as combining time diversity for the desired signal. This receiver, however, makes use of only time domain characteristic of signal transmission, and does not effectively utilize space characteristic of signal transmission. During receiving the signal, the mode of space diversity receive and diversity transmit can also be used to resist multi-path interference.

Let's still take a CDMA system as an example.

In a CDMA system, two antennas spaced several working electromagnetic wavelength are set for the base station. Since the multi-path effect of various users produces Rayleigh fading, the correlation between two signals received by the two antennas is small. Therefore implementing maximal ratio combining, equal gain combining or selection combining on the two signals can realize space diversity to improve the system performance. However, because of the limitation on price, size, and battery capacity, etc, it is impossible for the mobile station (especially mobile phone) to realize antenna receiving diversity. Thus another concept of improving the performance of downlink channel is to implement antenna transmit diversity at the base station.

Antenna transmit diversity at the base station is not as simple as antenna receiving diversity, and relatively complex to realize.

Recent years researches on antenna transmit diversity technology are very active, and also make certain significant progresses. In "On limits of wireless comm. in a fading environment when using multiple antennas", Wireless Personal Comm. Vol.6 No.3 p. 311-335, Mar. 1998, G. Jfoschini, Jr. and M. J. Gans calculated channel capacity of fading channel in multi-antenna transmit system. V. Tarokh, N. Seshadri and A. R. Calderbank proposed space time convolution code and block code, which are organic combination of coding, modulate, and antenna transmit diversity. WCDMA protocol defines two opened loop transmit diversity and two closed loop transmit diversity: time switched transmit diversity (TSTD), space time transmit diversity (STTD), closed loop transmit diversity mode 1, and closed loop transmit diversity mode 2.

In the above transmit diversities, two antennas are used. The data to be transmitted generates two path signals according to certain rules, and the signals generated are transmitted respectively through two transmitting channels provided by the two antennas.

To improve the system performance by making use of different space characteristic of different signals, many researchers have studied smart antenna technology, i.e. antenna array technology. The smart antenna uses two or more single antenna array elements to form antenna array. After radio frequency process, the signals received by each array element are added by weighting with suitable weight value so as to achieve space directional receiving. The weight values of all the array elements can be named as a weight vector. To achieve directional transmit at the same time with directional receive, the transmit data should be weighted in similar way to realize directional transmit. The essential of weighting is space filter. One weight vector corresponds to a certain beam pattern, and the key to realize directional receive and directional transmit is making the beam patterns corresponding to transmit weight vector same as or quite similar to the beam patterns corresponding to receive weight vector.

Smart antenna can also be viewed as a kind of space division multiple access (SDMA) technology. In SDMA, through regulating the phases and amplitudes of signals received by the antenna array, the desired signals are strengthened by addition for summing, and other interference signals are weakened by addition for summing. By this way, the signals received by the antenna array can realize the maximum SNR of desired signal after processing digital signal to implement digital beam former (DBF).

In a communication system, since the duplex communication methods adopted by the system are different, the determination of receive and transmit weight vectors of the smart antenna are also different. In other words, in order to let the receiving beam pattern tend to conform to transmitting beam pattern, different technologies are involved. For further explanation, the duplex communication mode of the communication system is briefly introduced first.

In digital mobile communication system, there are two kinds of duplex communication methods: time division duplex (TDD) and frequency division duplex (FDD).

In TDD mode, the base station and mobile station use the same frequency to receive and transmit signals. For the base station and mobile station, receiving and transmitting signals are separate and alternate in time, in a period of time only receiving signals and in another period of time only transmitting signals. Uplink and downlink asymmetry transmission can be realized by regulating the length of receiving and transmitting time. However, because of effect of transmission time delay, the coverage area of the base station in TDD technology is relatively small and hard to extend. In addition, because the same frequency is used in receiving and transmitting, the interference is more serious between receiving and transmitting as well as between the adjacent cells.

In FDD mode, the base station and mobile station receive and transmit continuously in time, and uplink and downlink frequencies are different. The FDD technology can realize in bigger cell, and there is no interference between uplink and downlink. The interference between the adjacent cells is relatively small, and it is easier to realize than TDD technology.

Compared with TDD, the utility range of FDD is even wider. FDD duplex method is adopted in systems such as Global System for Mobile Communications (GSM), IS-95, Personal Digital Cellular (PDC), American Digital Cellular (ADC), Wideband Code-Division Multiple-Access (WCDMA) symmetry frequency band, and CDMA2000, while TDD is adopted in digital wireless telephone systems such as Digital Enhanced Cordless Telecommunications (DECT) and Personal Handy phone System (PHS), and systems such as Time Division Synchronous Code Division Multiple Access (TD-SCDMA) and WCDMA asymmetry frequency band.

As described above, under TDD mode, since the receiving and transmitting frequencies of the base station are same, the receiving and transmitting (uplink and downlink) weight vectors are also same for smart antenna and the beam patterns are same, it is easy to handle. However, under FDD mode, since the receiving and transmitting frequencies of the base station are different and the beam pattern is related to radio frequency, same receiving and transmitting weight vectors correspond to different beam patterns. Thus, the transmitting weight vector different from the corresponding receiving weight vector is used to make the receiving beam pattern tend to conform to the transmitting beam pattern.

Since FDD technology is widely used in mobile communication systems, how to decide the transmitting weight vector of smart antenna based on the receiving weight vector has become a significant technical problem in the field.

So far, some solutions have been proposed, but all have some disadvantages.

First let's see switched beam smart antenna.

In this solution, some beam weight vectors pointing to different directions are predetermined. During communication, the beam weights of good receiving signals are chosen to calculate weighting result for further sequent processes. This idea is easy to figure out. Under FDD mode, the corresponding relation of the smart antenna receiving and transmitting weight vector is mainly decided by direction parameters, and the conversion of receiving and transmitting weight is very simple. But, the disadvantages of this solution are that more and better weight vectors require to be predetermined, the signals space distributing characteristics for the specific time could not be fully used, and the SNR of the signals received could not be effectively improved.

Second, see a partly adaptive smart antenna.

In this solution, generally the direction of arrival (DOA) information for the desired user is drawn from the array signals received, and then the beam pointing to the DOA is formed. The change of weights follows the change of DOA. The essential of this solution is to make the energy received of the desired user maximum, and meanwhile limitedly suppress the interference from other directions. The phased array belongs to this technology. In FDD, the receiving weight of the smart antenna is calculated according to the detected DOA by using a certain algorithm, and the transmitting weight also can be obtained according to DOA by using similar algorithm. The performance of partly adaptive smart antenna is better than that of the switched beam smart antenna. It can utilize the space distributing characteristic of signal at specific time. However, the partly adaptive smart antenna could not fully use the space information of the signal, and the adaptive range is limited, for example, all the amplitudes in a phase controlled array are same and unchangeable, while only the phase can vary adaptively; and additionally the algorithm for drawing the DOA is quite complex and certain problems exist when practical implementing.

Third, see a full adaptive smart antenna.

The weights of this kind of antenna do not need to be preset. Its weights continually are updated by certain rules according to the change of signal space distributing characteristic. The amplitude and phase of the weight can be updated freely. When the updating algorithm is convergent, this method can make full use of the space characteristic of the desired user's signals and interference signals to make the SNR of the signals received maximum, but generally partly adaptive smart antenna does not care DOA of the interference signals. The result is what we desire, and may be the best effect of the smart antenna. In FDD, the transmitting weight of this kind of smart antenna depends on the receiving weight obtained.

It is obvious that the wireless communication system using adaptive antenna array can achieve the best system performance. In practice, however, there are still some crucial technical problems that need to be settled. For example: in FDD adopted systems, how to decide the transmitting beam weight according to the receiving beam weight is one of problems that limit the development of adaptive antenna.

The method of the easiest thought is estimating the channel parameter irrelative with frequency from the received uplink data, such as DOA, and then generating transmitting beam based on the parameter, such as the beam whose major lobe points to the DOA. However, this method has some disadvantages: (1) since the channel environment is complicated and variable, the path with definite direction is not always available; (2) since the DOA of other users is not considered, the beam formed may interfere other users remarkably; (3) the algorithm for estimating DOA is relatively complex.

In "the combination technology of forming downlink beam and uplink Rake receiver", published by Journal of China Institute of Communications, Vol. 22. No. 3, March 2001, Wang Anyi, Bao zhen, and Liao Guisheng proposed another solution that downlink beam optimization is defined as maximizing the average receive power of desired user and meanwhile maintaining the addition of the noise power and average power received by other users less than or equal to a constant voltage $P_{lmax}$. This optimization rule itself adopts a compromise method, and the performance of the downlink optimum weight obtained is not as good as that of the uplink weight, so this method is not the best.

FDD is a duplex communication method widely used. The conversion of receiving and transmitting weight in FDD is one of the key technologies in implementing adaptive smart antenna.

Furthermore, as stated above, the technology using space diversity transmit is a more effective method to increase signal quality. However, the current transmit diversity is realized by means of two antennas spaced a large distance, so it is another relatively difficult problem how to realize transmit diversity by smart antenna array (the distance of adjacent antennas is only about half a wavelength).

In "Smart Antenna for Wireless Communications: IS-95 and Third Generation CDMA Applications", Joseph C. Liberti, Jr., a diversity method using two antenna array is discussed, but the method obviously cost too much.

ArrayComm Co., a company whose service is mainly adaptive smart antenna, has been making efforts to combine diversity and smart antenna. Their method is to divide a common antenna array into two parts. For example, a 4 array element antenna arrays is divided into two 2 array element antenna arrays which are positioned separately for receiving and transmit diversity. In this method, the advantages of transmit diversity are obtained at the price of reducing the smart antenna performance, which results in an effect that may be not desirable.

US 6018317 A discloses a method and apparatus for processing cochannel signals received at a sensor array in a cumulant-based signal processing and separation engine to obtain a desired set of output signals or parameters. For use in a signal recovery system, the output signals are recovered and separated versions of the originally transmitted cochannel signals. Specially, the cumulant-based system generates an estimated generalized steering vector associated with each signal source, and representative of all received coherent signal components attributable to the source, thus it performs well in multipath conditions, by combining all coherent multipath components from the same source. In a receiver/transmitter system, the estimated generalized steering vectors associated with each source are used to generate transmit beamformer weight vectors that permit cochannel transmission to multiple user stations.

Therefore, how to decide the transmitting beam weight applied to transmit diversity of smart antenna based on the receiving beam weight is still not settled.

SUMMARY OF THE INVENTION

One object of the present invention is to provide a linear conversion method for smart antenna receiving and transmitting weight vector applied to a FDD mobile communication system.

Another object of the present invention is to provide a conversion method for smart antenna receiving and transmitting weight vector integrated with Rake receive and transmit diversity.

According to the present invention, a method for deciding a transmitting weight of an antenna array is provided, characterized in that the transmitting weight is decided based on a receiving weight of the antenna array in a FDD communication system, and the method includes:

a step of deciding receiving steering vectors of an antenna array according to phase difference of the same signal received by each array element in an antenna array;

a step of deciding transmitting steering vectors of the antenna array according to phase difference of transmitting signal received by a receiver when each array element in the antenna array transmits signal;

a step of deciding relationship between receiving and transmitting weights and the array receiving and array transmitting steering vectors according to a principle of minimum variance of receive and transmit beam patterns;

a step of deciding a receiving and transmitting weight converting matrix according to the relationship between receiving and transmitting weights and the array receiving and array transmitting steering vectors; and

a step of obtaining a corresponding transmitting weight by the receiving and transmitting weight converting matrix according to the receiving weight obtained from the signal received by the antenna array.

According to the present invention, another method for deciding a transmitting weight of an antenna array is provided, characterized in that the transmitting weight is decided based on a receiving weight of the antenna array in a FDD communication system, and the method includes:

a step of weighting a transmitting signal with certain transmitting weight and then transmitting with a transmitting frequency by a fixed antenna array;

a step of receiving the transmitting signal by a plurality of transceivers spaced a certain distance from the antenna array;

a step of recording signal strength received by the transceivers and transferring the detected signal strength to a supervisor;

a step of obtaining a transmitting beam pattern of the antenna array in the supervisor according to the signal strength received by the transceivers positioned with various angles;

a step of transmitting signals with the same transmitting power by the plurality of transceivers according to a receiving frequency of the antenna array;

a step of receiving by the antenna array the signal transmitted by the plurality of transceivers, weighting it with a receiving weight vector preset in the supervisor, and then transferring the weighted signal to the supervisor;

a step of obtaining a receiving beam pattern of the antenna array in the supervisor according to the signal strength received;

a step of adjusting and obtaining a receiving weight vector of the antenna array in the supervisor by comparing the transmitting beam pattern with receiving beam pattern of the antenna array obtained in order to obtain a pair of receiving and transmitting weight vectors satisfying a principle of minimum variance of receiving and transmitting beam patterns;

a step of changing the transmitting weight vector of the antenna array, and repeating the above steps to get another corresponding receiving weight vector by repeating;

a step of deciding a receiving and transmitting weight converting matrix according to a plurality of pairs of receiving and transmitting weight vectors from the above steps; and

a step of getting a corresponding transmitting weight by the above receiving and transmitting weight converting matrix according to a receiving weight obtained from the signal received by the antenna array.

According to the present invention, a method for deciding a transmitting weight of an antenna array is provided, characterized in that the transmitting weight is decided by converting a receiving weight of the antenna array combined Rake receiving and transmitting diversity, and the method includes:

a space time Rake receiving step, in which a smart antenna base band process is implemented for each time distinguishable multi-path in the Rake receiver so as to form corresponding receiving beam weight vectors, and the number of receiving weight vectors being equal to the number of the multi-paths involved in energy combination in the Rake receiver;

a choosing receiving weight step, in which according to an indication from a control signal to implement transmit diversity, a beam weight vector with a better quality of corresponding received signal is chosen from each receiving beam weight vector;

a combining receiving weights step, in which according to the indication from a control signal to implement transmit diversity, the corresponding weight vectors are added algebraically to get a weight vector;

a converting receiving weight step, in which the weight vector obtained by the previous step is converted into a transmitting beam weight by a receiving and transmitting weight converting matrix; and

a transmitting weighting signal step, in which according to the indication from a control signal to implement transmit diversity, beam weighting is implemented on data to be transmitted by using the transmitting beam weight obtained from the previous step, and the weighted signal is sent to a RF system for transmitting.

According to the method for deciding transmitting weight based on the receiving weight of antenna array in FDD mobile communication system in the present invention, it can be realized updating transmitting weight continuously with the updating receiving weight during communication by using the weight converting matrix.

The method for converting receiving and transmitting weight of antenna array combined Rake receiving and transmitting diversity, according to the present invention, combines Rake receiver with transmit diversity of smart antenna, chooses suitable receiving beam weight to form transmitting beam weight by utilizing the characteristic of space time Rake receiver, then implements diversity transmit of signal through two beams with little coherence. Compared with the current transmit diversity technology, this method combines smart antenna space process. Its direction gain is dramatically improved, transmitting power is reduced, and electromagnetism pollution and transmitting channel interference are decreased. Meanwhile the method applies transmit diversity technology to smart antenna by using the information received by Rake receiver, then signal space characteristic and the advantages of diversity transmit are fully utilized and system performance is improving. It successfully realizes transmit diversity of smart antenna array in which the distance between the adjacent antennas is only half a wavelength.

BRIEF DESCRIPTION OF THE DRAWINGS

Further illustrations will be made with the accompanying drawings, in which

Figure 1 is a flowchart of the linear conversion method for receiving and transmitting weight according to the present invention;
Figure 2 is a beam pattern corresponding to receiving weight applied to a line array;
Figure 3 is a beam pattern corresponding to transmitting weight applied to a line array;
Figure 4 is a beam pattern corresponding to receiving weight applied to a circular array;
Figure 5 is a beam pattern corresponding to transmitting weight applied to a circular array;
Figure 6 is a flowchart of weight converting method for smart antenna combined Rake receiving and transmit diversity according to the present invention;
Figure 7 is a schematic diagram of multi-path propagation;
Figure 8 is a beam pattern corresponding to the strongest signal path, obtained by space time Rake receiver, in the propagation environment of Figure 7;
Figure 9 is a beam pattern corresponding to the sub-strongest signal path, obtained by space time Rake receiver, in the propagation environment of Figure 7;
Figure 10 is a beam pattern of transmit diversity obtained by means of weight conversion in the propagation environment of Figure 7; and
Figure 11 is a transmit beam pattern obtained by means of weight conversion when the higher level does not adopt transmit diversity, in the propagation environment of Figure 7.

DESCRIPTION OF THE PREFERRED EMBODIMENT(S)

The receiver and transmitter in the present invention may be mobile stations, and receiving and transmitting devices including base band process at base station too.

The key of the method for smart antenna receiving transmitting weight conversion applied in FDD mobile communication system in the present invention is that, according to theories' deduction, receiving weight and transmitting weight with consistent beam patterns can conform linear conversion relationship for given receiving frequency, transmitting frequency and a certain antenna array in mobile communication system. As long as the linear converting matrix is calculated according to a suitable theory model, or is measured according to actual antenna array, the receiving and transmitting weight conversion can be implemented by using the converting matrix during communication.

In an smart antenna system, the signals received by different array elements in an antenna array are weighted and combined by using different complex number weight vectors. These weights can be viewed as various components of a vector. A weight vector of weighting for received signals can be called as a receiving weight vector, or in shortened form as a receiving weight. Similarly, the signals sending to each antenna array element also should be weighted by using different complex number weight vectors. The weights can constitute transmitting weight vectors. However, because the receiving frequency is different from transmitting frequency in a FDD system, the receiving weight and transmitting weight should also be different and should be implemented certain conversion to make sure that the receiving and transmitting beam patterns are consistent.

Assume that an antenna array is composed of M antenna array elements, and each array element is arranged on a same plane in random sequence. The polar coordinates of every array element are $(r_1,\varphi_1)$, $(r_2,\varphi_2)$,..., $(r_M, \varphi_M)$, respectively. Each array element has its radiation direction pattern function $R_m(\theta)$, m=1,2,...,M,$\theta\in$ [0, 2$\pi$]. A central frequency of the received signal is $f_r=c/\lambda_r$, in which, c is the propagation rate of electromagnetic wave in the air, $\lambda_r$ is

carrier wavelength of the received signal. Since the size of the antenna array is small compared with the distance between signal source and the antenna array, it is considered that the signal arrives at the antenna array in the form of plane wave, and the amplitudes are same when the signal arrives at each antenna array element. However, because the wave path differences that the signal arrives at each antenna array element are different, the phases of the same signal received by each array element are different. For the signal arriving with angle $\theta$, taking origin as phase reference point, the phase $\psi_m$ at array element m is:

$$\psi_m = -\beta_r r_m \cos(\varphi_m - \theta), \quad \beta_r = 2\pi/\lambda_r \tag{1}$$

The response of different phase delays produced by different array elements for a signal, are called array respons, which can construct a vector:

$$Vr(\theta) = \begin{bmatrix} R_1(\theta)e^{j\psi_1} \\ R_2(\theta)e^{j\psi_2} \\ \vdots \\ R_M(\theta)e^{j\psi_M} \end{bmatrix} = \begin{bmatrix} R_1(\theta)e^{-j\beta_r r_1 \cos(\phi_1 - \theta)} \\ R_2(\theta)e^{-j\beta_r r_2 \cos(\phi_2 - \theta)} \\ \vdots \\ R_M(\theta)e^{-j\beta_r r_M \cos(\phi_M - \theta)} \end{bmatrix} \tag{2}$$

This vector is called array receiving steering vector. It is a function of angle of DOA $\theta$, and related to the working frequency. If the antenna array transmits signal, and the other party receives it in direction $\theta$, the phases of transmitting signal received by each array element of the antenna array in the other party are different. Similarly, assume that transmitting frequency is $f_t$, the corresponding wavelength is $\lambda_t$, $\beta_t = 2\pi/\lambda_t$, then array transmitting steering vector is:

$$Vt(\theta) = \begin{bmatrix} R_1(\theta)e^{-j\beta_t r_1 \cos(\phi_1 - \theta)} \\ R_2(\theta)e^{-j\beta_t r_2 \cos(\phi_2 - \theta)} \\ \vdots \\ R_M(\theta)e^{-j\beta_t r_M \cos(\phi_M - \theta)} \end{bmatrix} \tag{3}$$

Even if array elements are arranged in three-dimension space, receiving and transmitting steering vectors can be obtained too. Only the expression of the steering vector is more complex.

Assume that a receiving weight of an smart antenna is M-dimension complex number row vector Wr, a transmitting weight is M-dimension complex number row vector Wt, M-dimension complex number row steering vector with the direction of angle $\theta$ DOA while receiving is Vr($\theta$), and M-dimension complex number row steering vector with the direction of angle $\theta$ while transmitting is Vt($\theta$). According to the minimum variance principle of receiving and transmitting beam patterns, it can be obtained the following relationship between the receiving and transmitting weight:

$$Wt = \left[ \int_0^{2\pi} Vt(\theta)Vt^H(\theta)d\theta \right]^{-1} \left[ \int_0^{2\pi} Vt(\theta)Vr^H(\theta)d\theta \right] Wr \tag{4}$$

In the above equation, the superscript H denotes conjugate transpose, and the superscript -1 denotes matrix inverse. The above equation can be written as:

$$Wt = TWr \tag{5}$$

in which converting matrix T for M column and M row is:

$$T = \left[ \int_0^{2\pi} Vt(\theta) Vt^H(\theta) d\theta \right]^{-1} \left[ \int_0^{2\pi} Vt(\theta) Vr^H(\theta) d\theta \right] \qquad (6)$$

In practical calculating, the disperse form of equation (6) can also be used for data calculation. Dividing the range of 0 to $2\pi$ into K pieces of sectors as more as possible without overlapped or uncovered, the angle width of each sector is as smaller as possible, $\Delta\theta_k$, and the direction of each sector is denoted as $\theta_k$:

$$T = \left[ \sum_{k=1}^{K} Vt(\theta_k) Vt^H(\theta_k) \Delta\theta_k \right]^{-1} \left[ \sum_{k=1}^{K} Vt(\theta_k) Vr^H(\theta_k) \Delta\theta_k \right] \qquad (7)$$

The so-called minimum variance between the receiving and transmitting beam patterns is essentially better consistency of the receiving and transmitting beam pattern, which means that during communication, the direction pointed by the receiving beam is just the direction that the transmitting beam should point to. In such way, when receiving it can enhance signal energy of the desired user as high as possible and meanwhile suppress the signal energy of interference user as low as possible; and when transmitting it can transmits RF energy to the direction of the desired user as much as it can and the interference for users at other directions is as less as possible. From the equation (7), it can be seen that the receiving and transmitting weight conversion can be realized by only using simple multiplication and addition algorithm, as long as the linear converting matrix T is determined. This is a characteristic of the present invention.

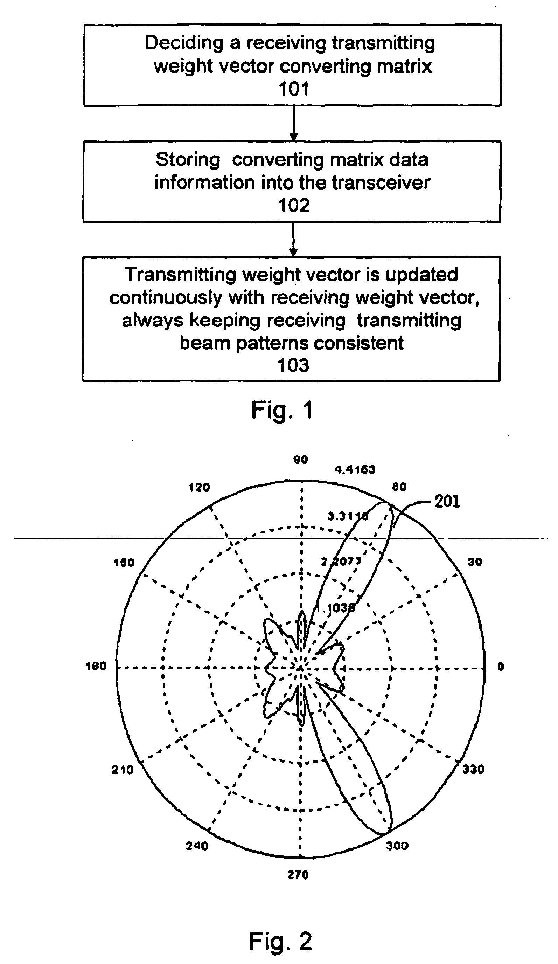

Figure 1 is a flowchart of the method for receiving and transmitting weight conversion according to the present invention. Process box 101 corresponds to the first step of the method, process box 102 corresponds to the second step of the method, and process box 103 corresponds to the third step of the method. The following is the detailed illustration:

The first step: when designing transceiver, a receiving and transmitting weight converting matrix is decided. If the transceiver needs to use a plurality of pairs of symmetry frequency bands, a plurality of converting matrixes should just be decided. There are many approaches to decide the converting matrix T, and several examples are as follows.

1. The steering vectors $Vr(\theta)$ and $Vt(\theta)$ in each direction during receiving and transmitting signals (the aggregation of the steering vectors in each direction can also be called array manifold) are calculated by the equation (2) or (3) according to the receiving and transmitting frequencies, antenna configuration and radiation patterns of array elements designed, and then converting matrix T is calculated by the equation (6) or (7).

2. The steering vectors $Vr(\theta)$ and $Vt(\theta)$ in each receiving and transmitting direction are obtained by experiment measurement according to the designed antenna array and corresponding system, and then converting matrix T is calculated by using the equation (6) or (7). The measurement for steering vectors can be implemented in open area or in shield room with large space. For measuring the receiving steering vectors, a signal source can be placed in a fixed place, and an antenna array may be placed several meters (e.g. 20 meters) away from the signal source. The antenna array may be fixed on a rotating plate that can rotate horizontally. The antenna array can rotate with the rotating plate. The signal source transmits signals with the receive frequency of the antenna array, and the antenna array receives the signals. By recording the receiving signal amplitudes and phases of each antenna array element when the antenna array circumrotates to each direction, $Vr(\theta)$ can be obtained. Similarly, when measuring the transmitting steering vectors, the receiving antenna should be placed several meters (e.g. 20 meters) away from the antenna array. Each array element of the antenna array transmits same signal with the transmit frequency in turn. The amplitudes and phases of the signals received are measured at the receiving antenna, and the antenna array is circumrotating to each angle to measure and then $Vt(\theta)$ is obtained.

3. The best converting matrix with a minimum variance is calculated in the equation (5) by directly regulating receiving and transmitting weights to conform the receiving beam pattern to transmitting beam pattern closely and then finding more pairs of such receiving transmitting weights.

The weight regulating can be implemented in an open area or in a shield room with large space. The antenna array is fixed. A plurality of (e.g. 25) transceivers are placed evenly on a circle centered with the antenna array, which, for an antenna array applying to a sector, could be an arc corresponding to the sector angle. The distance between the transceivers and the antenna array should be big enough (e.g. 20 meters). The antenna array weights the transmitting signal with certain transmitting weight vector, and then transmits with a transmitting frequency. Each transceiver receives the transmit signal from the antenna array, and measures the strength of received signals. And then the measuring result is sent to a supervision computer. The supervision computer obtains the transmitting beam pattern of the antenna array according to the signal strength received from the transceivers placed at each direction. At the same time, each transceiver transmits the signals spread by different spreading code with the receiving frequency of the antenna array. Every transceiver's transmitting power is equal. The antenna array receives and weights the signals with receiving weight vectors pointed by the supervision computer. And then the signals transmitted by each transceiver are de-spread and the signal strengths received by each transceiver are measured. The measuring result is sent to the supervision computer so as to obtain the receiving beam pattern of the antenna array. The computer compares the difference between the receiving and the transmitting beam patterns, and adjusts receiving weight vector of the antenna array randomly and slightly. After adjusting, the computer measures the difference between the receiving and transmitting beam patterns. If the difference reduces, the adjusting is received. Otherwise, it should be returned to the state before the adjusting, and another adjustment should be implemented randomly and slightly. The adjustments are implemented repeatedly to reduce the difference between the receiving and transmitting beam patterns to smaller and smaller. When the difference is reduced to certain degree or can not be reduced by lots of times (e.g. 200 times), the adjustment is considered being finished. In this way a pair of receiving transmitting weights is obtained. Then, the transmitting weight vector of the antenna array is changed to make its each component different from the component corresponding to the transmit weight in the receiving and transmitting weight pair measured. Then the corresponding receiving weight is found out by implementing the process above. For the antenna array with N array elements, the converting matrix can be obtained according to equation (5) as long as N pairs of receiving and transmitting weights are found out. To get a more reliable converting matrix, more pairs of receiving and transmitting weights should be found out, and the best converting matrix under a minimum variance can be obtained by using the equation (5).

The second step: the data information of the converting matrix is stored into the transceiver, and in the transceiver, software and hardware modules for realizing the algorithm of equation (5) are provided. The converting matrix is useful at all time. No matter how mobile users change or whether mobile phones turn off or restart, the converting matrix obtained by the first step should not be changed as long as the antenna array structure and the receiving and transmitting frequencies do not change. Because there are only multiplication and addition operations in the equation (5), the software and hardware conditions for implementing the algorithm of the equation (5) is relatively simple, which can be realized by using a digital signal processor (DSP) in the situation that the updating speed is not high, or by using a field programmable gate array (FPGA) or special chip in the situation of high updating speed.

The third step: during communication, with continuously updating the receiving weight, the transmitting weight is updated by certain software and hardware according to the equation (5) so as to keep consistency between the receiving and transmitting beam patterns all the time.

The above method can be applied to any array forms including line array, circular array, and any multi-access systems including CDMA and TDMA. It has wide applicability.

The method of the present invention can be simulated as follows.

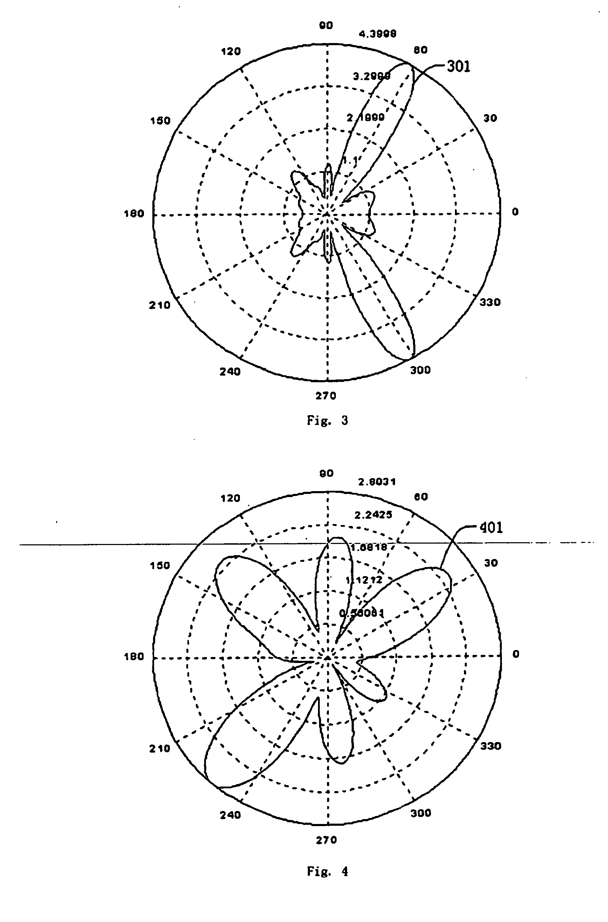

Figure 2 and 3 are beam patterns when applying the method of the present invention to line array with equidistant partition. The receiving weight is generated randomly. The number of array elements M is 8. The receiving frequency (WaveLenUp) is 1920MH$_z$, and the transmitting frequency (WaveLenDown) is 2110MH$_z$. The distance between the adjacent array elements is half a transmitting signal wavelength. Each array element is omni-directional antenna. In Figure 2, curve 201 is a beam pattern corresponding to the receiving weigh generated randomly. Its main beam direction is approximately 62 degree (because omni-directional line array is axis symmetry, namely the beam pattern of half circle down and that of half circle up are same, there is no need to consider the half circle down). Weight converting matrix can be deduced according to the above model. In the deducing process, the circle is divided into 360 equal sectors, and the converting matrix T is calculated by the equation (7). In figure 3, curve 301 is the beam pattern of the transmitting weight after linear conversion. Comparing with WaveLenUp in figure 2, the difference between them is very little. Therefore, it can be seen that the method of the present invention is really effective.

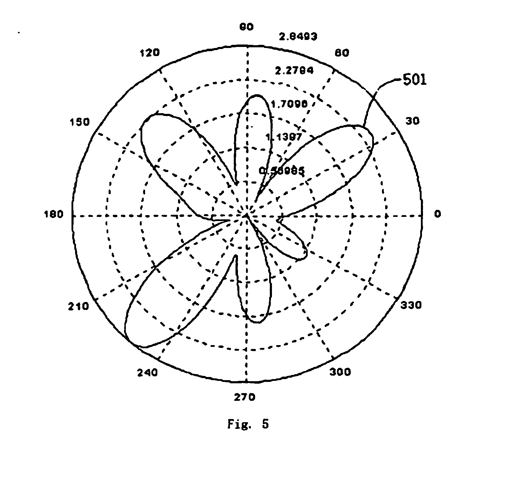

Figures 4 and 5 are beam patterns when applying the method of the present invention to a circular array. A receiving weight is generated randomly. The number of array elements M is 8. The receiving frequency (WaveLenUp) is 1920MH$_z$, transmitting frequency (WaveLenDown) is 2110MH$_z$. The circular array full array factor rou = 1, circular array radius R = rou*M*WaveLenDown/4/$\pi$, and array elements are distributed along the circle equally. Each array element is omni-directional antenna. In Figure 4, curve 401 is a beam pattern corresponding to the uplink weigh generated randomly. It forms higher beam gain in the directions of 35 degree, 85 degree, 135 degree, 230 degree, etc., and forms lower Null in the directions of 60 degree, 110 degree, 195 degree, 255 degree, 300 degree, 350 degree, etc. The weight converting matrix is obtained from the above model. In this process, the circle is divided into 360 equal sectors, and the converting matrix T is obtained by the equation (7). In Figure 5, curve 501 is the beam pattern of the transmitting weight after linear conversion. Comparing it with the beam direction of uplink weight in Figure 4, the difference between beam Null and main/side lobe direction is very little. Therefore, it can be seen that the method of the present invention is really effective.

In fact, no matter what kind of array forms, they all have their array manifolds, so the linear weight converting matrix can be calculated precisely by the equation (6) or (7).

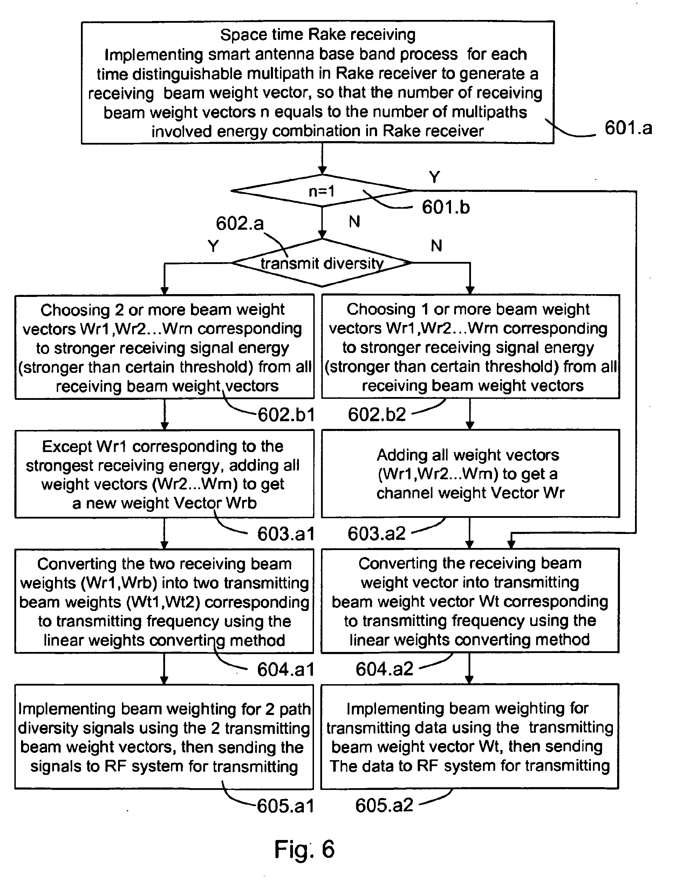

Figure 6 is a flowchart of smart antenna weight conversion combined Rake receive and transmit diversity according to the present invention. Its core concept is that Rake receiver produces a weight (i.e. weight vector) corresponding to each multi-path respectively. Among weights, the weights corresponding to the multi-path with better signal are chose, and then combined or not combined according to transmit diversity requirement so as to form one or two weights. Then, such one or two weights are implemented receiving and transmitting linear conversion by the weight converting matrix to get transmitting weight(s). The transmitting signal is weighted for beam by using this transmitting weight.

The method for smart antenna receiving and transmitting weight conversion combined Rake receive and transmit diversity, according to the present invention, includes the following steps:

The first step is space time Rake receiving. Smart antenna base band process is implemented on each time-distinguishable multi-path in the Rake receiver to form a receiving beam weight vector. Thus, the number of receiving beam weight vectors n is the number of multi-paths in the Rake receiver involved in energy combination. If the number of weight vector n=1, the weight vector is defined as Wr and go to the forth step; if n is not equal to 1, then start the second step.

The second step is choosing the weighted value. Whether the base station higher level has indicated to implement transmit diversity is checked. If transmit diversity is needed, two or more beam weight vectors corresponding to good signals (beyond a certain threshold) are chosen among weight vectors of each receiving beam. If no transmit diversity is needed, one or more beam weight vectors corresponding to good signal(s) is (are) chosen among weight vectors of each receiving beam. At last, the chosen weight vectors are Wr1, Wr2, ......, Wm in the sequence of corresponding receiving signal quality from good to bad.

The third step is weight combination. If transmit diversity is needed, all the weight vectors (Wr2,..., Wrn) except the weight vector (Wr1) corresponding to the best signal are added to get a new weight vector $W_{rb}$. If no transmit diversity is needed, all the weight vectors (Wr1,Wr2,..., Wrn) are added to get a channel weight vector Wr.

The fourth step is linear conversion. Under the principle of keeping the receiving and transmitting beam shapes basically unchanged, the one (Wr) or two (Wr1, Wrb) beam weights obtained in above steps is(are) converted into one (Wt) or two (Wt1, Wt2) transmitting beam weights corresponding to the transmitting frequency by using the linear receiving and transmitting weight converting method.

The fifth step is transmitting diversity. If two transmitting beam weights Wt1, Wt2 are obtained in the fourth step (here, the higher level indicates to implement transmit diversity), two path diversity signals are implemented beam weighting respectively with the two transmitting beam weights, and then sent to the RF system for transmitting. It one transmitting beam weight Wt is obtained in the fourth step, the data to be transmitted is implemented beam weighting with Wt, and then sent to the RF system for transmitting.

The above steps are described according to signal flow. In practical communication process, all steps are carried out simultaneously.

In Figure 6, the process box 601.a and the decision box 601.b correspond to the first step, implementing space and time Rake process on the signals received. Each multi-path has a receiving weight vector. If there is only one multi-path, skip to process box 604.a2; otherwise go to decision box 602.a to decide whether transmit diversity is needed. If transmit diversity is needed by the higher level, the process boxes 602.b1, 603.a1, 604.a1, 605.a1 are implemented in turn to choose two or more beam weight vectors corresponding to good receiving signals from receiving beam weight vectors. If the number of beam weight vector is more than two, all the weight vectors except the weight vector corresponding to the best signal are added to get a new weight vector, and then the two receiving beam weight vectors are converted into two transmitting beam weight vectors by the receiving and transmitting weight linear conversion method, so that the transmitting and receiving beam shapes are basically same. Then the two path diversity signals are implemented beam weight operation with the two transmitting beam weight vectors, and then sent to RF system for transmitting. If the higher level does not instruct transmit diversity, the process boxes 602.b2, 603.a2, 604.a2, 605.a2 are implemented in turn. Compared with transmit diversity, under this situation, only one weight vector needs to be combined out. One or more beam weight vector(s) with good quality is(are) chosen among the receiving weight vectors. Then the weight vectors are added to get a new receiving weight vector. Then the receiving weight vector is converted into transmitting beam weight vector by the receiving and transmitting weight converting method. Finally, the data to be transmitted is implemented beam weighting operation with the transmitting beam weight vector, and then sent to the RF system for transmitting. The decision box 602.a and process boxes 602.b1, 602.b2 correspond to the second step in the method. The process boxes 603.a1, 603.a2 correspond to the third step in the method. The process boxes 604.a1, 604.a2 correspond to the forth step in the method. And the process boxes 605.a1, 605.a2 correspond to the fifth step in the method.

Now illustrate the effect of the method of the present invention with the particular examples below.

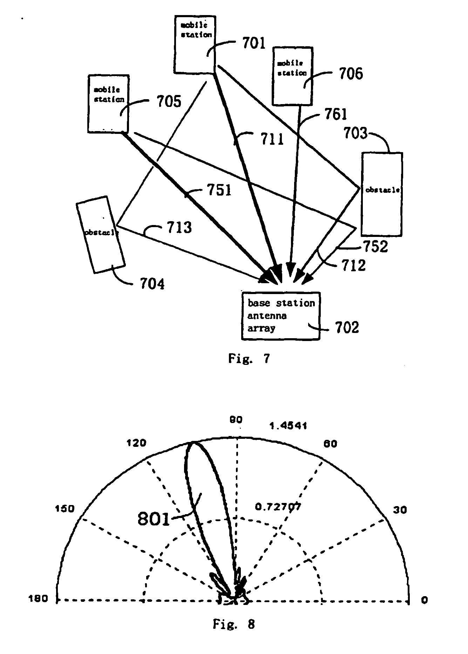

Figure 7 is a schematic of multi path propagation. The signals transmitted by mobile station 701 arrive at antenna 702 in the base station through three paths. The signal arrive the base station through direct transmitting path 711 has the most energy (generally, the quality is the best). The signal through reflection path 712 reflected by barrier 703 has less energy. The signal through reflection path 713 reflected by barrier 704 has the least energy. The signal from mobile station 701 is the desired signal to be processed. In addition, there are the other two mobile stations 705 and 706 in the figure. For the communication process that the base station receives the signal transmitted by mobile station 701, the signals from these two mobile stations are interference signal. The signal from mobile station 705 arrives at the base station antenna array through paths 751 and 752. The signal from mobile station 706 arrives at the base station antenna array through path 761.

Figure 8 is a beam pattern corresponding to the weight vector corresponding to the strongest path 711 in space time branch receiver under the environment of Figure 7, during space time Rake receiving. Here, assume that the antenna array is a uniform line array with 8 array elements, which is applied to a coverage of 120 degree sector. What we concern is a range from 30 degree to 150 degree. The polar coordination radius in the figure means signal amplitude gain in specific direction. It can be seen from the beam 801 in the Figure that signal gain is very great at the area around 105 degree, but very small in other directions. In this way, the useful signal passing through path 711 in figure 7 can be received well, and the signal from other directions can be suppressed as interference.

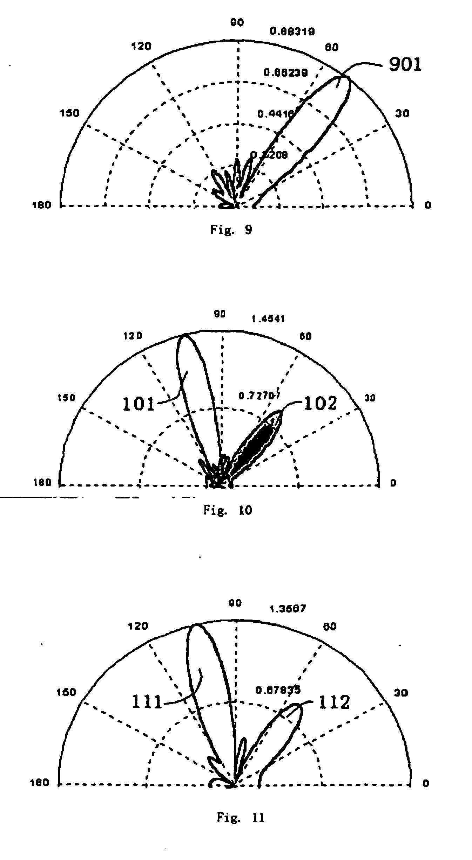

Figure 9 is a beam pattern corresponding to the sub-strongest path 712 under the environment of Figure 7, namely a beam pattern corresponding to another weight in space time branch receiver. Similar to beam 801 in Figure 8, beam 901 in Figure 9 has great gain around 50 degree, while in other directions gains are little, so the useful signal passing through path 712 in Figure 7 can be received well, and the signal from other directions can be suppressed as interference. Finally, energy of each multi-path signal can be combined by Rake multi-path combination.

For the signal arriving at the base station through path 713, because the energy is too little to be utilized, Rake receiver can utilize or not utilize this path to form another beam.

Figure 10 is a beam pattern of transmit diversity under the environment of Figure 7. During conversion of receiving and transmitting weight, the receiving weight vectors corresponding to beam 801 and 901 of good quality are chosen, and then converted into two transmitting weights by the receiving and transmitting weight linear converting method. The corresponding transmitting beams are beam 101 and beam 102. For the two path signals of transmit diversity, one is transmitted through beam 101, another is transmitted through beam 102. Beam 101 corresponds to beam 801 in Figure 8, and the signal through this beam will be transmitted from the base station antenna array to mobile station 701 through path 711 in Figure 7.

Beam 102 corresponds to beam 901 in Figure 9, and the signal through this beam will be transmitted from the base station antenna array to mobile station 701 through path 712 in Figure 7. Since the two beams have good directional characteristic, this method causes very little interferences to mobile stations in other directions (e.g. mobile stations 705 and 706 in Figure 7) is very little while realizing common transmit diversity, which highly contributes to the increase of communication quality and capacity and to the decrease of system power.

Figure 11 is a beam pattern overlaid by two stranger beam weights under the environment of Figure 7. If the high level does not indicate transmit diversity, the weight vectors corresponding to beam 801 in Figure 8 and beam 901 in Figure 9 are added to get a beam pattern corresponding to a new weight vector according to the receiving and transmitting weight converting method. In the beam pattern, there are two bigger lobes 111 and 112 pointing to the direction of 105 degree and 50 degree respectively. The user data are transmitted through the beam, and may arrive at mobile station 701 from the base station antenna array through paths 711 and 712 in Figure 7, which generates little interference to other mobile stations 705 and 706. In mobile station 701, the signals through the two lobes can be received and combined by the Rake receiver of the mobile station. The receiving and transmitting converting method realizes another kind of transmit diversity to certain degree. This method has the effect similar to that of conventional transmit diversity (e.g. open loop transmit diversity, closed loop transmit diversity), and it is easier for the mobile station to implement receive process. Also, the interference to other user is little, and the power needed is lower. Furthermore, compared with smart antenna system with one direction beam, this transmitting method can effectively resist the multipath variety caused by moving of the mobile station, and the stability and robustness of smart antenna system are improved.

In conclusion, the receiving and transmitting weight linear converting method of the present invention makes only linear matrix calculation and involves only addition and multiplication operations, which is simple. The method can minimize variance between the beam patterns corresponding to receiving and transmitting weights, so the consistency of receiving and transmitting beam patterns is very good. The receiving and transmitting weight linear converting method solves a key problem in smart antenna technology -- receiving and transmitting weight conversion in FDD system, which eliminates a big obstacle for smart antenna in FDD system and has a great significance.

The receiving and transmitting weight linear converting method combined Rake receiver and transmit diversity, according to the present invention, can make full use of the information received by Rake receiver, and utilize transmit diversity technology in smart antenna skillfully. Even when the high level does not indicate transmit diversity, the method can still make the transmit beam weight have the function of transmit diversity, so that the transmitting signal can arrive at the other party through a plurality of better paths. The method solves the problem how to organically combine smart antenna and transmit diversity. Compared with the current mobile communication systems only using certain technology, the method of the present invention has certain advantages.

The method of the present invention can be applied to any array, and FDD smart antenna communication system using any multi-access technology, which has wide applicability.

**Claims**

1. A method for deciding a transmitting weight vector of an array antenna **characterized in that** the transmitting weight vector is decided based on a receiving weight vector of an antenna array in a FDD communication system, and the method includes:

   a step of deciding receiving steering vectors of an antenna array according to phase difference of the same signal received by each array element in an antenna array;

   a step of deciding transmitting steering vectors of the antenna array according to phase difference of transmitting signal received by a receiver when each array element in the antenna array transmits signal;

   a step of deciding relationship between receiving and transmitting weight vectors and the array receiving and array transmitting steering vectors according to a principle of minimum variance of receiving and transmitting beam patterns;

   a step of deciding a receiving and transmitting weight vector converting matrix according to the relationship between receiving and transmitting weight vectors and the array receiving and array transmitting steering vectors (101); and

   a step of obtaining a corresponding transmitting weight vector by the receiving and transmitting weight vector converting matrix according to the receiving weight vector obtained from the signal received by the antenna array (103).

2. The method of claim 1, wherein the receiving steering vectors and the transmitting steering vectors can be decided by receiving and transmitting frequencies, antenna structure and radiation pattern of the antenna array element of the system.

3. The method of claim 1, wherein:

   the receiving steering vectors can be obtained by recording amplitudes and phases of signals received by each array element positioned with various angles in the antenna array through the antenna array being placed on a rotating plate that can rotate horizontally and is spaced a certain distance from a signal source which transmits a signal with the receiving frequency of the array antenna;

   the transmitting steering vectors can be obtained by recording amplitudes and phases of signals received by each array element positioned with various angles in a receiving antenna array through the receiving antenna array being placed on a rotating plate that can rotate horizontally and is spaced a certain distance from a transmitting antenna array wherein each array element of the transmitting antenna transmits the same signal in turn with a transmitting frequency.

4. A method for deciding a transmitting weight vector based on a receiving weight vector of an antenna array in a FDD communication system, including:

   a step of weighting a transmitting signal with certain transmitting weight vector and then transmitting with a transmitting frequency by a fixed antenna array;

   a step of receiving the transmitting signal by a plurality of transceivers spaced a certain distance from the antenna array;

   a step of recording signal strength received by the transceivers and transferring the detected signal strength to a supervisor;

   a step of obtaining a transmitting beam pattern of the antenna array in the supervisor according to the signal strength received by the transceivers positioned with various angles;

   a step of transmitting signals with the same transmitting power by the plurality of transceivers according to a receiving frequency of the antenna array;

   a step of receiving by the antenna array the signal transmitted by the plurality of transceivers, weighting it with a receiving weight vector preset in the supervisor, and then transferring the weighted signal to the supervisor;

   a step of obtaining a receiving beam pattern of the antenna array in the supervisor according to the signal strength received;

a step of adjusting and obtaining a receiving weight vector of the antenna array in the supervisor by comparing the transmitting beam pattern with the receiving beam pattern of the antenna array obtained in order to obtain a pair of receiving and transmitting weight vectors satisfying a principle of minimum variance of receiving and transmitting beam patterns;

a step of changing the transmitting weight vector of the antenna array, and repeating the above steps to get another corresponding receiving weight vector by repeating;

a step of deciding a receiving and transmitting weight vector converting matrix according to a plurality of pairs of receiving and transmitting weight vectors from the above steps (101); and

a step of getting a corresponding transmitting weight vector by the above receiving and transmitting weight vector converting matrix according to a receiving weight vector obtained from the signal received by the antenna array (103).

5. The method of claim 1 or 4, wherein the antenna array is a line array.

6. The method of claim 1 or 4, wherein the antenna array is a circular array.

7. The method of claim 1 or 4, wherein the receiving transmitting weight vectors converting matrix implements the conversion operation by a linear operation, which may realized by a digital signal processor.

8. The method of claim 1 or 4, wherein the receiving transmitting weight vectors converting matrix implements the conversion operation by a linear operation, which may realized by a field programmable gate array.

9. The method of claim 1 or 4, wherein the receiving transmitting weight vectors converting matrix implements the conversion operation by a linear operation, which may realized by a special chip.

10. The method of claim 1 or 4, wherein according to different receiving and transmitting frequency bands, the receiving and transmitting weight vector converting matrix can be decided as different corresponding converting matrixes.

11. A method for deciding a transmitting weight vector of an antenna array, **characterized in that** the transmitting weight vector is decided by converting a receiving weight vector of the antenna array combined Rake receive and transmit diversity, and the method includes:

a space time Rake receiving step, in which a smart antenna base band process is implemented for each time distinguishable multi-path in the Rake receiver so as to form corresponding receiving beam weight vectors, the number of receiving weight vectors being equal to the number of the multi-paths involved in energy combination in the Rake receiver (601.a, 601.b);

a choosing receiving weight vector step, in which, according to an indication from a control signal to implement transmit diversity, a beam weight vector with a better quality of corresponding received signal is chosen from each receiving beam weight vector (602.a, 602.b1, 602.b2);

a combining receiving weight vector step, in which according to the indication from a control signal to implement transmit diversity, the corresponding weight vectors are added algebraically to get a weight vector (603.a1, 603.a2);

a converting receiving weight vector step, in which the weight vector obtained by the previous step is converted into a transmitting beam weight vector by a receiving and transmitting weight vector converting matrix (604.a1, 604.a2); and

a transmitting weighting signal step, in which according to the indication from a control signal to implement transmit diversity, beam weighting is implemented on data to be transmitted by using the transmitting beam weight vector obtained from the previous step, and the weighted signal is sent to a RF system for transmitting (605.a1, 605.a2).

12. The method of claim 11, wherein when the control signal indicates transmit diversity,

the choosing receiving weight vector step includes choosing two or more beam weight vectors (Wr1, Wr2,... Wrn) corresponding to receiving signals of better quality (beyond a certain threshold) among all receiving beam weight vectors;

the combining receiving weight vector step includes adding all other bean weight vectors (Wr2,..., Wrn) except a bean weight vector ($W_{r1}$) corresponding to the signal of the best quality to get a new combined beam weight vector ($W_{rb}$);

the converting receiving weight vector step includes converting the beam weight vector corresponding to the signal of the best quality and the combined beam weight vector into two transmitting beam weight vectors (Wt1, Wt2) by the receiving and transmitting weight vector converting matrix;
the transmitting weighting signal step includes implementing beam weighting operation on the two diversity signals with the two transmitting beam weight vectors obtained above, and sending the weighted signals to a RF system for transmitting.

13. The method of claim 11, wherein when the control signal does not indicate transfer diversity,
the choosing receiving weight vector step includes choosing one or more beam weight vectors (Wr1, Wr2,...Wrn) corresponding to receiving signals of better quality among all receiving beam weight vectors;
the combining receiving weight vector step includes adding all bean weight vectors (Wr1,Wr2,..., Wrn) to get a channel weight vector (Wr);
the converting receiving weight vector step includes converting the above combined weight vector (Wr) into a transmitting beam weight vector (Wt) by the receiving and transmitting weight vector converting matrix;
the transmitting weighting signal step includes implementing beam weighting operation on signal to be transmitted with the transmitting beam weight vector (Wt) obtained above, and sending the weighted signal to a RF system for transmitting.

14. The method of claim 11, wherein in the space time Rake receiving step, if the number of the receiving beam weight vectors equals to 1, the choosing receiving weight vector and combining receive weight vector steps will not be implemented, no matter whether the control signal indicates transmit diversity or not.

## Patentansprüche

1. Ein Verfahren zum Festlegen eines Sendegewichtsvektors einer Antennengruppe, **dadurch gekennzeichnet, dass** der Sendegewichtsvektor auf der Basis eines Empfangsgewichtsvektors einer Antennengruppe in einem FDD-Kommunikationssystem festgelegt wird und das Verfahren Folgendes umfasst:

einen Schritt des Festlegens von Empfangslenkvektoren einer Antennengruppe gemäß einer Phasenverschiebung desselben Signals, das von jedem Gruppenelement in einer Antennengruppe empfangen wird;
einen Schritt des Festlegens von Sendelenkvektoren der Antennengruppe gemäß einer Phasenverschiebung eines Sendesignals, das von einem Empfänger empfangen wird, wenn jedes Gruppenelement in der Antennengruppe ein Signal sendet;
einen Schritt des Festlegens einer Beziehung zwischen Empfangs- und Sendegewichtsvektoren und den Gruppenempfangs- und
Gruppensendelenkvektoren gemäß einem Prinzip der Minimalvarianz von Empfangs- und Sendestrahlmustern;
einen Schritt des Festlegens einer Empfangs- und Sendegewichtsvektorkonvertiermatrix gemäß der Beziehung zwischen den Empfangs- und Sendegewichtsvektoren und den Gruppenempfangs- und Gruppensendelenkvektoren (101); und
einen Schritt des Erhaltens eines entsprechenden Sendegewichtsvektors durch die Empfangs- und Sendegewichtsvektorkonvertiermatrix gemäß dem Empfangsgewichtsvektor, der von dem durch die Antennengruppe empfangenen Signal erhalten wird (103).

2. Verfahren gemäß Anspruch 1, wobei die Empfangslenkvektoren und die Sendelenkvektoren durch Empfangs- und Sendefrequenzen, Antennenstruktur und Strahlungsmuster des Antennengruppenelements des Systems festgelegt werden können.

3. Verfahren gemäß Anspruch 1, wobei:

die Empfangslenkvektoren durch das Aufzeichnen von Amplituden und Phasen von Signalen, die von jedem Gruppenelement, positioniert in verschiedenen Winkeln in der Antennengruppe, empfangen werden, erhalten werden können, indem die Antennengruppe auf einer sich drehenden Platte platziert wird, die sich horizontal drehen kann und mit einer gewissen Entfernung von einer Signalquelle, die ein Signal mit der Empfangsfrequenz der Antennengruppe sendet, beabstandet ist;
die Sendelenkvektoren durch das Aufzeichnen von Amplituden und Phasen von Signalen, die von jedem Gruppenelement, positioniert in verschiedenen Winkeln in einer Empfangsantennengruppe, empfangen werden, erhalten werden können,
indem die Empfangsantennengruppe auf einer sich drehenden Platte platziert wird, die sich horizontal drehen kann und mit einer gewissen Entfernung von einer Sendeantennengruppe beabstandet ist, wobei jedes Gruppenelement der Sendeantenne dasselbe Signal der Reihe nach mit einer Sendefrequenz sendet.

**4.** Ein Verfahren zum Festlegen eines Sendegewichtsvektors auf der Basis eines Empfangsgewichtsvektors einer Antennengruppe in einem FDD-Kommunikationssystem, das Folgendes umfasst:

einen Schritt des Gewichtens eines Sendesignals mit einem gewissen Sendegewichtsvektor und dann Senden mit einer Sendefrequenz durch eine Festantennengruppe;
einen Schritt des Empfangens des Sendesignals durch eine Vielzahl von Transceivern, die mit einer gewissen Entfernung von der Antennengruppe beabstandet sind;
einen Schritt des Aufzeichnens einer durch die Transceiver empfangenen Signalstärke und Übertragen der erfassten Signalstärke an ein Hauptsteuerprogramm;
einen Schritt des Erhaltens eines Sendestrahlmusters der Antennengruppe in dem Hauptsteuerprogramm gemäß der Signalstärke, die durch die in verschiedenen Winkeln positionierten Transceivern empfangen werden;
einen Schritt des Sendens von Signalen mit derselben Sendeleistung durch die Vielzahl von Transceivern gemäß einer Empfangsfrequenz der Antennengruppe; einen Schritt des Empfangens des von der Vielzahl von Transceivern gesendeten Signals durch die Antennengruppe, Gewichten von diesem mit einem Empfangsgewichtsvektor, welcher in dem Hauptsteuerprogramm voreingestellt ist,
und dann Übertragen des gewichteten Signals an das Hauptsteuerprogramm; einen Schritt des Erhaltens eines Empfangsstrahlmusters der Antennengruppe in dem Hauptsteuerprogramm gemäß der empfangenen Signalstärke;
einen Schritt des Anpassens und Erhaltens eines Empfangsgewichtsvektors der Antennengruppe in dem Hauptsteuerprogramm durch Vergleichen des Sendestrahlmusters mit dem erhaltenen Empfangsstrahlmuster der Antennengruppe, um ein Paar Empfangs- und Sendegewichtsvektoren zu erhalten, die ein Prinzip der Minimalvarianz von Empfangs- und Sendestrahlmustern erfüllen; einen Schritt des Änderns des Sendegewichtsvektors der Antennengruppe und Wiederholen der obigen Schritte, um einen weiteren entsprechenden Empfangsgewichtsvektor durch Wiederholen zu bekommen;
einen Schritt des Festlegens einer Empfangs- und Sendegewichtsvektorkonvertiermatrix gemäß einer Vielzahl von Paaren an Empfangs- und Sendegewichtsvektoren aus den obigen Schritten (101); und
einen Schritt des Bekommens eines entsprechenden Sendegewichtsvektors durch die obige Empfangs- und Sendegewichtsvektorkonvertiermatrix gemäß einem Empfangsgewichtsvektor, der von dem durch die Antennengruppe empfangenen Signal erhalten wird (103).

**5.** Verfahren gemäß Anspruch 1 oder 4, wobei die Antennengruppe eine lineare Gruppe ist.

**6.** Verfahren gemäß Anspruch 1 oder 4, wobei die Antennengruppe eine kreisförmige Gruppe ist.

**7.** Verfahren gemäß Anspruch 1 oder 4, wobei die Empfangs-Sende-Gewichsvektorenkonvertiermatrix den Konvertierungsvorgang durch einen linearen Vorgang implementiert, der durch einen digitalen Signalprozessor durchgeführt werden kann.

**8.** Verfahren gemäß Anspruch 1 oder 4, wobei die Empfangs-Sende-Gewichsvektorenkonvertiermatrix den Konvertierungsvorgang durch einen linearen Vorgang implementiert, der durch eine frei programmierbare logische Anordnung durchgeführt werden kann.

**9.** Verfahren gemäß Anspruch 1 oder 4, wobei die Empfangs-Sende-Gewichsvektorenkonvertiermatrix den Konvertierungsvorgang durch einen linearen Vorgang implementiert, der durch einen Spezialchip durchgeführt werden kann.

**10.** Verfahren gemäß Anspruch 1 oder 4, wobei gemäß unterschiedlichen Empfangs- und Sendefrequenzbändern die Empfangs- und Sendegewichtsvektorkonvertiermatrix als unterschiedliche entsprechende Konvertiermatrizen festgelegt werden kann.

**11.** Ein Verfahren zum Festlegens eines Sendegewichtsvektors einer Antennengruppe, **dadurch gekennzeichnet, dass** der Sendegewichtsvektor durch das Konvertieren eines Empfangsgewichtsvektors der kombinierten Rake-Empfangs-und-SendeDiversität der Antennengruppe festgelegt wird und das Verfahren Folgendes umfasst:

einen Raum-Zeit-Rake-Empfangsschritt, wobei ein Basisbandprozess einer intelligenten Antenne für jeden zeitlich unterscheidbaren Mehrweg in dem Rake-Empfänger implementiert wird, um entsprechende Empfangsstrahlgewichtsvektoren zu bilden, wobei die Zahl an Empfangsgewichtsvektoren gleich der Zahl der Mehrwege ist, welche bei der Energiekombination in dem Rake-Empfänger involviert sind (601.a, 601.b);

einen Schritt des Auswählens eines Empfangsgewichtsvektors, wobei, gemäß einer Angabe von einem Steuersignal zur Implementierung von Sendediversität, ein Strahlgewichtsvektor von einer besseren Qualität des entsprechenden empfangenen Signals aus jedem Empfangsstrahlgewichtsvektor ausgewählt wird (602.a, 602.b1, 602. b2);

einen Schritt des Kombinierens von Empfangsgewichtsvektoren, wobei, gemäß der Angabe von einem Steuersignal zur Implementierung von Sendediversität, die entsprechenden Gewichtsvektoren algebraisch addiert werden, um einen Gewichtsvektor zu bekommen (603.a1, 603.a2);

einen Schritt des Konvertierens eines Empfangsgewichtsvektors, wobei der durch den vorherigen Schritt erhaltene Gewichtsvektor durch eine Empfangs- und Sendegewichtsvektorkonvertiermatrix in einen Sendestrahlgewichtsvektor konvertiert wird (604.a1, 604.a2); und

einen Schritt des Sendens eines Gewichtungssignals, wobei, gemäß der Angabe von einem Steuersignal zur Implementierung von Sendediversität,

Strahlgewichtung bei zu sendenden Daten implementiert wird, indem der aus dem vorherigen Schritt erhaltene Sendestrahlgewichtsvektor verwendet wird, und das gewichtete Signal zu einem HF-System zum Senden geschickt wird (605.a1, 605.a2).

12. Verfahren gemäß Anspruch 11, wobei, wenn das Steuersignal Sendediversität angibt,

der Schritt des Auswählens eines Empfangsgewichtsvektors das Auswählen von zwei oder mehreren Strahlgewichtsvektoren (Wr1, Wr2,... Wrn), entsprechend Empfangssignalen mit einer besseren Qualität (über einem gewissen Schwellenwert), unter allen Empfangsstrahlgewichtsvektoren umfasst;

der Schritt des Kombinierens von Empfangsgewichtsvektoren das Addieren aller anderen Strahlgewichtsvektoren (Wr2,..., Wrn) mit Ausnahme eines Strahlgewichtsvektors ($W_{r1}$), entsprechend dem Signal mit der besten Qualität, umfasst, um einen neuen kombinierten Strahlgewichtsvektor ($W_{rb}$) zu bekommen; der Schritt des Konvertierens eines Empfangsgewichtsvektors das Konvertieren des Strahlgewichtsvektors, entsprechend dem Signal mit der besten Qualität, und des kombinierten Strahlgewichtsvektors in zwei Sendestrahlgewichtsvektoren (Wt1, Wt2) durch die Empfangs- und Sendegewichtsvektorkonvertiermatrix umfasst; der Schritt des Sendens eines Gewichtungssignals das Implementieren eines Strahlgewichtungsvorgangs an den zwei Diversitätssignalen mit den oben erhaltenen zwei Sendestrahlgewichtsvektoren und das Schicken der gewichteten Signale an ein HF-System zum Senden umfasst.

13. Verfahren gemäß Anspruch 11, wobei, wenn das Steuersignal keine Übertragungsdiversität angibt,

der Schritt des Auswählens eines Empfangsgewichtsvektors das Auswählen von einem oder mehreren Strahlgewichtsvektoren (Wr1, Wr2,... Wrn), entsprechend Empfangssignalen mit einer besseren Qualität, unter allen Empfangsstrahlgewichtsvektoren umfasst;

der Schritt des Kombinierens von Empfangsgewichtsvektoren das Addieren aller Strahlgewichtsvektoren (Wr1, Wr2,..., Wrn) umfasst, um einen Kanalgewichtsvektor (Wr) zu erhalten;

der Schritt des Konvertierens eines Empfangsgewichtsvektors das Konvertieren des obigen kombinierten Gewichtsvektors (Wr) in einen Sendestrahlgewichtsvektor (Wt) durch die Empfangs- und Sendegewichtsvektorkonvertiermatrix umfasst;

der Schritt des Sendens eines Gewichtungssignals das Implementieren eines Strahlgewichtungsvorgangs an einem zu sendenden Signal mit dem oben erhaltenen Sendestrahlgewichtsvektor (Wt) und das Schicken des gewichteten Signals an ein HF-System zum Senden umfasst.

14. Verfahren gemäß Anspruch 11, wobei in dem Zeit-Raum-Rake-Empfangsschritt, falls die Zahl der Empfangsstrahlgewichtsvektoren gleich 1 ist, die Schritte des Auswählens eines Empfangsgewichtsvektors und des Kombinierens von Empfangsgewichtsvektoren nicht implementiert werden, egal ob das Steuersignal Sendediversität angibt oder nicht.

**Revendications**

1. Un procédé de détermination d'un vecteur de pondération d'émission d'une antenne réseau **caractérisé en ce que** le vecteur de pondération d'émission est déterminé d'après un vecteur de pondération de réception d'une antenne réseau dans un système de communication FDD, le procédé incluant :

une étape de détermination de vecteurs directionnels de réception d'une antenne réseau en fonction d'un déphasage du même signal reçu par chaque élément de réseau dans un réseau d'antennes ;

une étape de détermination de vecteurs directionnels d'émission de l'antenne réseau en fonction d'un déphasage d'un signal d'émission reçu par un récepteur lorsque chaque élément de réseau dans le réseau d'antennes ;

une étape de détermination de la relation existant entre des vecteurs de pondération de réception et d'émission et les vecteurs directionnels de réception de réseau et d'émission de réseau selon un principe de variance minimale de diagrammes de faisceau de réception et d'émission ;

une étape de détermination d'une matrice de conversion de vecteurs de pondération de réception et d'émission en fonction de la relation existant entre des vecteurs de pondération de réception et d'émission et les vecteurs directionnels de réception et d'émission de réseau (101) ; et

une étape d'obtention d'un vecteur de pondération d'émission correspondant par la matrice de conversion des vecteurs de pondération de réception et d'émission en fonction du vecteur de pondération de réception obtenu à partir du signal reçu par l'antenne réseau (103).

2. Le procédé de la revendication 1 dans lequel les vecteurs directionnels de réception et les vecteurs directionnels d'émission peuvent être déterminés en utilisant les fréquences de réception et d'émission, la structure de l'antenne et le diagramme de rayonnement de l'élément de réseau d'antennes du système.

3. Le procédé de la revendication 1 dans lequel :

les vecteurs directionnels de réception peuvent être obtenus par l'enregistrement des amplitudes et des phases de signaux reçus par chacun des éléments de réseau positionnés selon divers angles dans le réseau d'antennes, celui-ci étant placé sur un plateau tournant capable de tourner horizontalement et espacé d'une certaine distance d'un signal source qui émet un signal à la fréquence de réception de l'antenne réseau ;

les vecteurs directionnels d'émission peuvent être obtenus par l'enregistrement des amplitudes et des phases des signaux reçus par chacun des éléments de réseau positionnés selon divers angles dans un réseau d'antennes de réception, celui-ci étant placé sur un plateau tournant capable de tourner horizontalement et espacé d'une certaine distance d'un réseau d'antennes d'émission, chaque élément de réseau d'antennes d'émission émettant à son tour le même signal à une fréquence d'émission.

4. Un procédé de détermination d'un vecteur de pondération d'émission basé sur un vecteur de pondération de réception d'une antenne réseau dans un système de communication FDD, incluant :

une étape consistant à pondérer un signal d'émission avec un certain vecteur de pondération d'émission puis à émettre à une fréquence d'émission par une antenne réseau fixe ;

une étape consistant à recevoir le signal d'émission par une pluralité d'émetteurs-récepteurs espacés d'une certaine distance de l'antenne réseau ;

une étape consistant à enregistrer la puissance de signal reçue par les émetteurs-récepteurs et à transférer la puissance de signal détectée à un superviseur ;

une étape d'obtention d'un diagramme de faisceau d'émission de l'antenne réseau dans le superviseur en fonction de la puissance de signal reçue par les émetteurs-récepteurs positionnés selon divers angles ;

une étape d'émission de signaux avec la même puissance d'émission par la pluralité d'émetteurs-récepteurs en fonction d'une fréquence de réception de l'antenne réseau ;

une étape comprenant la réception par l'antenne réseau du signal émis par la pluralité d'émetteurs-récepteurs, la pondération de ce signal avec un vecteur de pondération de réception préréglé dans le superviseur, puis le transfert du signal pondéré au superviseur ;

une étape d'obtention d'un diagramme de faisceau de réception de l'antenne réseau dans le superviseur en fonction de la puissance de signal reçue ;

une étape consistant à ajuster et à obtenir un vecteur de pondération de réception de l'antenne réseau dans le superviseur en comparant le diagramme de faisceau d'émission au diagramme de faisceau de réception de l'antenne réseau obtenu en vue d'obtenir une paire de vecteurs de pondération de réception et d'émission répondant à un principe de variance minimale de diagrammes de faisceaux de réception et d'émission ;

une étape consistant à modifier le vecteur de pondération d'émission de l'antenne réseau et à répéter les étapes ci-dessus pour obtenir un autre vecteur de pondération de réception correspondant par répétition ;

une étape de détermination d'une matrice de conversion de vecteurs de pondération de réception et d'émission en fonction d'une pluralité de paires de vecteurs de pondération de réception et d'émission provenant des étapes ci-dessus (101) ; et

une étape d'obtention d'un vecteur de pondération d'émission correspondant par la matrice de conversion de vecteurs de pondération de réception et d'émission ci-dessus en fonction d'un vecteur de pondération de réception obtenu à partir du signal reçu par l'antenne réseau (103).

**5.** Le procédé de la revendication 1 ou 4 dans lequel l'antenne réseau est un réseau linéaire.

**6.** Le procédé de la revendication 1 ou 4 dans lequel l'antenne réseau est un réseau circulaire.

**7.** Le procédé de la revendication 1 ou 4 dans lequel la matrice de conversion de vecteurs de pondération de réception et d'émission met en oeuvre l'opération de conversion par une opération linéaire, laquelle peut être réalisée par un processeur de signal numérique.

**8.** Le procédé de la revendication 1 ou 4 dans lequel la matrice de conversion de vecteurs de pondération de réception et d'émission met en oeuvre l'opération de conversion par une opération linéaire, laquelle peut être réalisée par un réseau prédiffusé programmable par l'utilisateur (FPGA, Field Programmable Gate Array).

**9.** Le procédé de la revendication 1 ou 4 dans lequel la matrice de conversion des vecteurs de pondération de réception et d'émission met en oeuvre l'opération de conversion par une opération linéaire, laquelle peut être réalisée par un circuit intégré spécial.

**10.** Le procédé de la revendication 1 ou 4 dans lequel, en présence de différentes bandes de fréquences de réception et d'émission, la matrice de conversion de vecteurs de pondération de réception et d'émission peut être déterminée sous la forme de différentes matrices de conversion correspondantes.

**11.** Un procédé de détermination d'un vecteur de pondération d'émission d'une antenne réseau **caractérisé en ce que** l'on détermine le vecteur de pondération en convertissant un vecteur de pondération de réception de la diversité de réception et d'émission Rake combinée de l'antenne réseau, le procédé incluant :

une étape de réception Rake spatio-temporelle dans laquelle un processus de bande de base d'antenne intelligente est mis en oeuvre pour chaque trajet multiple discriminable dans le temps dans le récepteur Rake de façon à former des vecteurs de pondération de faisceau de réception correspondants, le nombre de vecteurs de pondération de réception étant égal au nombre de trajets multiples impliqués dans la combinaison d'énergie dans le récepteur Rake (601.a, 601.b) ;
une étape de sélection de vecteur de pondération de réception dans laquelle, selon une indication fournie par un signal de commande de mise en oeuvre d'une diversité d'émission, un vecteur de pondération de faisceau ayant une meilleure qualité de signal reçu correspondant est choisi parmi les vecteurs de pondération du faisceau de réception (602.a, 602.b1, 602.b2) ;
une étape de combinaison de vecteur de pondération de réception dans laquelle, selon l'indication fournie par un signal de commande de mise en oeuvre d'une diversité d'émission, les vecteurs de pondération correspondants sont ajoutés algébriquement pour obtenir un vecteur de pondération (603.a1, 603.a2) ;
une étape de conversion de vecteurs de pondération de réception dans laquelle le vecteur de pondération obtenu à l'étape précédente est converti en un vecteur de pondération de faisceau d'émission par une matrice de conversion de vecteurs de pondération de réception et d'émission (604.a1, 604.a2) ; et
une étape d'émission de signal de pondération dans laquelle, selon l'indication fournie par un signal de commande de mise en oeuvre d'une diversité d'émission, la pondération du faisceau est mise en oeuvre sur des données à émettre en utilisant le vecteur de pondération de faisceau d'émission obtenu à l'étape précédente, puis le signal pondéré est envoyé à un système RF pour émission (605.a1, 605.a2).

**12.** Le procédé de la revendication 11 dans lequel, lorsque le signal de commande indique une diversité d'émission, l'étape de sélection de vecteurs de pondération de réception inclut la sélection d'au moins deux vecteurs de pondération de faisceau (Wr1, Wr2, ... Wrn) correspondant à des signaux de réception de meilleure qualité (au-delà d'un certain seuil) parmi tous les vecteurs de pondération du faisceau de réception ;
l'étape de combinaison de vecteurs de pondération de réception inclut l'ajout de tous les autres vecteurs de pondération de faisceau (Wr2, ..., Wrn), à l'exception d'un vecteur de pondération de faisceau ($W_{r1}$) correspondant au signal de la meilleure qualité pour obtenir un nouveau vecteur de pondération de faisceau combiné ($W_{rb}$) ;
l'étape de conversion de vecteurs de pondération de réception inclut la conversion du vecteur de pondération de faisceau correspondant au signal de la meilleure qualité et du vecteur de pondération de faisceau combiné en deux vecteurs de pondération de faisceau d'émission (Wt1, Wt2) par la matrice de conversion de vecteurs de pondération de réception et d'émission ;

l'étape d'émission de signaux de pondération inclut la mise en oeuvre d'une opération de pondération de faisceau sur les deux signaux de diversité avec les deux vecteurs de pondération de faisceau d'émission obtenus ci-dessus et l'envoi des signaux pondérés à un système RF pour émission.

13. Le procédé de la revendication 11 dans lequel, lorsque le signal de commande n'indique pas de diversité d'émission, l'étape de sélection de vecteurs de pondération de réception inclut la sélection d'au moins un vecteur de pondération de faisceau (Wr1, Wr2, ... Wrn) correspondant à des signaux de réception de meilleure qualité parmi tous les vecteurs de pondération du faisceau de réception ;

l'étape de combinaison de vecteurs de réception inclut l'ajout de tous les vecteurs de pondération de faisceau (Wr1, Wr2, ..., Wrn) pour obtenir un vecteur de pondération de canal (Wr) ;

l'étape de conversion de vecteur de pondération de réception inclut la conversion du vecteur de pondération combiné ci-dessus (Wr) en un vecteur de pondération de faisceau d'émission (Wt) par la matrice de conversion de vecteurs de pondération de réception et d'émission ;

l'étape d'émission de signal de pondération inclut la mise en oeuvre d'une opération de pondération de faisceau sur le signal à émettre avec le vecteur de pondération de faisceau d'émission (Wt) obtenu ci-dessus et l'envoi du signal pondéré à un système RF pour émission.

14. Le procédé de la revendication 11, dans lequel, à l'étape de réception Rake spatio-temporelle, si le nombre des vecteurs de pondération de réception de faisceau est égal à 1, les étapes de sélection de vecteur de pondération de réception et de combinaison de vecteurs de pondération de réception ne seront pas mises en oeuvre, indépendamment du fait que le signal de commande indique ou n'indique pas de diversité d'émission.

Deciding a receiving transmitting
weight vector converting matrix
101

Storing converting matrix data
information into the transceiver
102

Transmitting weight vector is updated
continuously with receiving weight vector,
always keeping receiving transmitting
beam patterns consistent
103

Fig. 1

Fig. 2

Fig. 3

Fig. 4

Fig. 5

```
┌─────────────────────────────────────────────────────────────┐
│                  Space time Rake receiving                   │
│  Implementing smart antenna base band process  for each      │
│  time distinguishable multipath in Rake receiver to generate a│
│  receiving  beam weight vector, so that the number of receiving│
│  beam weight vectors n equals to the number of multipaths    │
│  involved energy combination in Rake receiver                │      601.a
└─────────────────────────────────────────────────────────────┘
```

n=1    Y    601.b

602.a    N

Y    transmit diversity    N

| Choosing 2 or more beam weight vectors Wr1,Wr2...Wrn corresponding to stronger receiving signal energy (stronger than certain threshold) from all receiving beam weight vectors | Choosing 1 or more beam weight vectors Wr1,Wr2...Wrn corresponding to stronger receiving signal energy (stronger than certain threshold) from all receiving beam weight vectors |
|---|---|

602.b1    602.b2

| Except Wr1 corresponding to the strongest receiving energy, adding all weight vectors (Wr2...Wm) to get a new weight Vector Wrb | Adding all weight vectors (Wr1,Wr2...Wm) to get a channel weight Vector Wr |
|---|---|

603.a1    603.a2

| Converting the two receiving beam weights (Wr1,Wrb) into two transmitting beam weights (Wt1,Wt2) corresponding to transmitting frequency using the linear weights converting method | Converting the receiving beam weight vector into transmitting beam weight vector Wt corresponding to transmitting frequency using the linear weights converting method |
|---|---|

604.a1    604.a2

| Implementing beam weighting for 2 path diversity signals using the 2 transmitting beam weight vectors, then sending the signals to RF system for transmitting | Implementing beam weighting for transmitting data using the  transmitting beam weight vector Wt, then sending The data to RF system for transmitting |
|---|---|

605.a1    605.a2

## Fig. 6

Fig. 7

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6018317 A

### Non-patent literature cited in the description

- **G. Jfoschini, Jr. ; M. J. Gans.** On limits of wireless comm. in a fading environment when using multiple antennas. *Wireless Personal Comm.,* March 1998, vol. 6 (3), 311-335

- **Wang Anyi ; Bao zhen ; Liao Guisheng.** the combination technology of forming downlink beam and uplink Rake receiver. *Journal of China Institute of Communications,* March 2001, vol. 22 (3
- **Joseph C. ; Liberti, Jr.** *Smart Antenna for Wireless Communications: IS-95 and Third Generation CDMA Applications*